# EUROPEAN PATENT APPLICATION

(11) **EP 4 636 290 A1**
(43) Date of publication of application: **22.10.2025**
(21) Application number: 24386046.7
(22) Date of filing: 19.04.2024
(51) Int. Cl.: F16K 31/04, F16K 31/50, F16K 31/52

(54) **VALVE WITH MOVABLE VALVE MEMBER**

(71) Applicant: Airbus Operations Limited, Bristol BS34 7PA (GB)
(72) Inventor: Papadopoulos, Christopher, Bristol, BS34 7PA (GB)
(74) Representative: EIP

(57) **Abstract**

Disclosed is a valve comprising a valve housing (210) defining a valve chamber (220). A valve member (250) is rotatably mounted in the valve chamber. The valve comprises a drive member (340) in the valve housing, the drive member coupled to the valve member and linearly movable relative to the valve housing to cause rotation of the valve member. The valve comprises a linkage located in the housing for translating a linear motion of the drive member to a rotating motion of the valve member.

## Description

### TECHNICAL FIELD

The present invention relates to valves, fluid systems comprising such valves, particularly hydrogen fuel systems, and aircraft comprising such valves and/or fluid systems.

### BACKGROUND

Aircraft fuel systems comprise valves for controlling a flow of fuel through such hydrogen fuel systems. Some such valves comprise valve members that are actuatable to block and unblock fluid pathways through the valves.

### SUMMARY

A first aspect of the present invention provides a valve comprising: a valve housing defining a valve chamber; a valve member rotatably mounted in the valve chamber; a drive member in the valve housing, the drive member coupled to the valve member and linearly movable relative to the valve housing to cause rotation of the valve member; and a linkage located in the housing for translating a linear motion of the drive member to a rotating motion of the valve member.

The linkage allows a rotational valve member to be provided, while also enabling the drive member to move linearly relative to the housing. This may allow a different type of seal to be provided around the drive member than if the drive member were to be configured to rotate relative to the housing. For instance, providing the linearly movable drive member and the linkage in the housing may allow a dynamic seal around the drive member to be omitted, which may reduce a likelihood of leakage of fluid through the seal from the valve chamber, in use.

Providing the rotatable valve member may allow the valve member to be designed to reduce an agitation of flow through the ball valve compared, for example, to a linearly movable valve member, such as in a sluice valve. With such a sluice valve, when the valve member is retracted to permit a flow of fluid through the valve chamber, a gap may be present between the valve member and a member housing into which the valve member retracts, which may cause agitation, and thus undesired heating, of the fluid flowing through the valve. With a rotatable valve member, such as a ball or c-shaped valve member as discussed below, the valve member may be so shaped as to reduce agitation of fluid flowing through the valve, in use.

Optionally, the valve comprises a flexible member comprising a first end connected to the drive member such that there is no relative movement between the first end and the drive member, and a second end connected to the valve housing such that there is no relative movement between the second end and the valve housing. The flexible member fluidically isolates the valve chamber from an external atmosphere external to the valve housing.

In contrast to a dynamic seal, providing the flexible member may reduce a likelihood of a fluid in the valve chamber passing into the atmosphere. For instance, with a dynamic seal, the fluid may pass from the valve chamber into the atmosphere through a sliding interface between the dynamic seal and either the drive member or the housing. This may particularly occur when the fluid is, for example, hydrogen fuel, which has the smallest molecular size of any fluid. In particular, hydrogen molecules and atoms have the smallest van der Waals radii of any molecule or atom. The claimed valve comprises no such sliding interface, and so may provide better sealing of the valve chamber and the fluid passing therethrough, in use. Moreover, by not comprising such a sliding interface, a wear of such an interface may be avoided, thereby improving a longevity of the valve.

Optionally, the valve is configured so that a fluid is flowable through valve chamber, in use. Optionally, the valve housing comprises a valve inlet and a valve outlet, each opening into the valve chamber. Optionally, the fluid is flowable through the valve chamber from the valve inlet to the valve outlet. Optionally, the valve member is movable to selectively permit or prevent a flow of fluid through the valve chamber from the valve inlet to the valve outlet.

Providing a linear motion of the drive member may improve a longevity of the flexible member. For instance, moving, or articulating, the drive member linearly may induce tensile and/or compressive stresses due to linear bending about the principle axes of the cross sectional area of the material of the flexible member, i.e. along lines extending between the housing and the drive shaft, along the flexible member. In contrast, rotating the drive shaft relative to the housing may induce torsional stresses in the flexible member, i.e., stresses torsional to the principle bending axes of the flexible member. The flexible member may be more resilient to such tensile and/or compressive stress longitudinally about the principle axes of the second moment of area of the cross section than torsional stress within the principle axes of the cross sections second moment of area, and so moving the drive shaft linearly along the drive axis may reduce a rate of fatigue of the flexible member compared to rotating the drive shaft around the drive axis.

Optionally, the drive member is linearly movable along a drive axis that extends through the flexible member between the external atmosphere and the valve chamber. Moving the drive member along the drive axis may cause the first end of the flexible member to move in a direction along the drive axis relative to the second end, which may induce a tensile and/or compressive stress in the flexible member between the first and second ends.

Optionally, a portion of the drive member to which the first end of the flexible member is connected is configured not to rotate around the drive axis relative to the housing. This may reduce an amount of torsional stress induced in the flexible member as the drive member moves, thereby improving longevity of the flexible member as discussed above.

Optionally, the valve member is rotatable about a valve axis to a first position, in which the valve member permits a flow of fluid from the valve inlet to the valve outlet, and a second valve position, in which the valve member prevents a flow of the fluid from the valve inlet to the valve outlet. Optionally, the valve member is rotatable by an angle of up to 90 degrees around the valve axis between the first position and the second position.

Optionally, the valve is a ball valve. Optionally, the valve is a C-type ball valve, comprising a C-shaped valve member. Providing a C-type ball valve, rather than a full ball with a conduit therethrough, may reduce a weight of the valve. The C-shaped valve member may permit fluid connection of one of the valve inlet and the valve outlet with the valve chamber when the valve member is in the second position. This may prevent hydrogen becoming trapped in the valve chamber, such as in the conduit of the ball valve, when the valve member is in the second position. This may, in turn, prevent a build-up of pressure in the valve chamber (e.g., in the conduit) due to gradual heating and evaporation of such trapped hydrogen. This may improve a longevity of the valve.

The C-ball valve and/or the ball valve described above may better provide a lower resistance to a flow of fluid from the valve inlet to the valve outlet than other valves with rotatable valve members, such as butterfly valves, or valves with sliding valve members, such as sluice valves. For instance, with a butterfly valve, the valve member comprises a disc that pivots in the valve chamber. The disc therefore obstructs a fluid path through the butterfly valve even when the butterfly valve is fully open, thereby inducing turbulence into a flow of fluid therethrough. This may cause undesirable heating of the fluid. In contrast, the conduit of the ball valve described above, and/or the channel of the C-ball valve, may provide a more consistently smooth surface through the valve chamber from the valve inlet to the valve outlet, thereby reducing agitation to flow therethrough compared to e.g., a butterfly valve. This may, in turn, reduce a pressure drop across the ball valve and/or the C-ball valve compared to such a butterfly valve, and/or may reduce a heating of the fluid. Reducing heating of the fluid may reduce a likelihood of cavitation of the fluid, such as when the fluid is cryogenic liquid hydrogen, which may in turn reduce cavitation wear on components of the valve such as the valve member. This may improve a longevity of the valve compared to other valves that obstruct the flow of fluid therethrough to a greater extent.

Optionally, the linkage comprises a crank arranged to translate a linear motion of the drive member to a rotational motion of the valve member within the valve chamber. The crank may provide an efficient way to translate the linear motion of the drive member to a rotational motion of the valve member. This may particularly be the case compared, for example, to a transmission comprising one or more gears, or a screw thread, for translating the linear motion of the drive shaft to a rotating motion of the valve member. Such a transmission may experience increased frictional and/or inertial resistance compared to the arrangement comprising the crank. Thus, providing the crank may reduce a power requirement of the valve, for instance as compared to a valve comprising gears or sliding surfaces.

Optionally, the crank comprises a crank arm extending away from the valve axis. Optionally, the valve comprises a connecting rod connecting the drive member to the crank. Optionally, the connecting rod comprises a first rod end connected, such as pinned, to the drive member, and a second rod end connected, such as pinned, to the crank. The drive member, connecting rod, and crank may form a slider-crank linkage. Such a slider-crank linkage may have fewer sliding interfaces between its components than other linkages, such as screwed or geared linkages. The slider-crank linkage may therefore experience reduced friction and/or wear compared to such other linkages.

Optionally, the drive member comprises or is connected to a first link portion, and the linkage comprises a second link portion engaged with the first link portion. Optionally, one of the first and second link portions comprises a screw thread, and the other of the first and second link portions comprises an engaging member engaged with the screw thread so that a linear motion of the first link portion relative to the second link portion causes a rotational motion of the second link portion relative to the first link portion. Providing the screw thread and engaging member may allow the mechanism to generally extend along the drive axis. This may provide a more compact arrangement than, for example, the slider-crank mechanism, which may require space in the valve housing in which the connecting rod and crank arm can swing. Providing the screw thread and engaging member may also provide a mechanism that is straightforward to install, maintain and disassemble, such as by unscrewing the first and second link portions from each other.

Optionally, the engaging member comprises a further screw thread. Optionally, when the drive member is connected to the first link member, the linkage comprises the first link member.

Optionally, the valve comprises a linear actuator operable to cause linear motion of the drive member. In this way, the linear actuator may be operable, such as by a controller, to cause rotation of the valve member to a desired orientation in the valve chamber, such as to move the valve member to the first and/or the second position. The linear actuator may thereby be operable, such as by the controller, to provide desired flow characteristics through the valve. Optionally, the linear actuator is a solenoid-type actuator.

Optionally, the linear actuator comprises a motor and a drive screw mechanism. Optionally, the drive screw mechanism comprises a lead screw arranged to receive rotating motion from the motor, and a lead nut arranged to provide linear motion to the drive member.

Optionally, the drive screw mechanism comprises ball screw and/or a roller screw configured to operate in a similar way to the lead screw. Optionally, the linear actuator may comprise a piston, such as a hydraulic, pneumatic, or electromagnetic piston.

Optionally, the valve comprises a further flexible member comprising a further first end connected to the drive member and a further second end connected to the valve housing.

The further flexible member may provide redundancy in the event of a leak of fluid through the first member. This may allow the valve to continue operating in the event of such a leak, improving an uptime of the valve compared to a valve comprising just the first member.

Optionally, the further first end is connected to the drive member such that there is no relative movement between the further first end and the drive member, and the further second end is connected to the valve housing such that there is no relative movement between the further second end and the valve housing.

Optionally, the flexible member and the further flexible member are spaced apart to define a cavity between the flexible member and the further flexible member.

In this way, fluid leaking through the flexible member may be captured in the cavity. This may permit detection of the leak through a detection of the fluid in the cavity. Providing the further flexible member and the cavity may allow the leak to be detected and/or remedial action to be taken without fluid escaping into the external atmosphere.

Optionally, a vacuum is present in the cavity. In this way, the cavity may provide improved thermal insulation of the valve chamber from the external atmosphere compared to a cavity absent such a vacuum, such as when air is present in the cavity.

A second aspect of the present invention provides a fluid system comprising the valve of the first aspect. The fluid system may comprise and/or benefit from any of the optional features and/or advantages ascribed to the valve of the first aspect or the valve of the second aspect. For instance, the valve of the first aspect may provide reduced leakage of fluid flowing through the fluid system than a valve comprising a dynamic seal, as described above.

Optionally, when the valve comprises the cavity between the first and second members, the fluid system comprises a sensor configured to detect the presence of a fluid from the fluid system in the cavity. Such a sensor may be a pressure sensor, a temperature sensor or a composition sensor. The sensor may permit remedial action to be taken in the event of a leak of fluid through the first member and into the cavity. Such remedial action may include, for instance, maintenance and/or replacement of the valve. This may improve a reliability of the fluid system compared to a fluid system absent such a sensor.

When the fluid system comprises a temperature sensor, the temperature sensor may be configured to detect a temperature of the further flexible member. When the vacuum is present in the cavity, the temperature of the further flexible member may be close to a temperature of the external atmosphere. A leak of the fluid into the cavity, particularly when the fluid is cryogenic hydrogen, may cause a reduction in the temperature of the further flexible member, which may be detected by the temperature sensor.

The valve may comprise a spacer in the cavity. The spacer may be configured to space the first and second membranes apart when the vacuum is present in the chamber. The fluid system may comprise a strain gauge configured to sense a stress in the spacer. A loss of the vacuum in the cavity, such as due to a leak of the fluid into the cavity, may be indicated by a reduction in a compressive stress in the spacer as detected by the strain gauge.

Optionally, the fluid system is a hydrogen fuel system. The valve comprising the seal may be particularly beneficial for use with hydrogen fuel systems. This is because hydrogen fuel system may be more susceptible to leaks through a valve comprising a dynamic seal than other types of fuel system, due to the relatively small molecular size of hydrogen, as discussed above.

The hydrogen fuel system may comprise a hydrogen fuel tank for storing hydrogen fuel. Optionally, the hydrogen fuel system comprises one or more conduits for passing fuel through the hydrogen fuel system from the hydrogen fuel tank. The valve may be arranged to selectively permit or prevent flow through the at least one of the one or more conduits.

Optionally, the fluid system is an aircraft hydrogen fuel system. For the reasons outlined above, the valve may be particularly beneficial for reducing a likelihood of a leak of hydrogen fuel from the aircraft hydrogen fuel system into an atmosphere inside the aircraft. This may improve reliability of the aircraft hydrogen fuel system compared , for example, to an aircraft hydrogen fuel system comprising a valve with a dynamic seal.

The one or more conduits may be configured to distribute hydrogen fuel from the hydrogen fuel tank to one or more consumer units, such as engines or generators, of the aircraft.

A fourth aspect of the present invention provides an aircraft comprising the valve of the first aspect, the valve of the second aspect, or the fluid system of the third aspect. The aircraft may comprise and/or benefit from any of the optional features and/or advantages of the valve of the first aspect, the valve of the second aspect, and/or the fuel system of the third aspect.

### BRIEF DESCRIPTION OF THE DRAWINGS

Embodiments of the invention will now be described, by way of example only, with reference to the accompanying drawings, in which:
Figure 1 shows an example aircraft comprising a hydrogen fuel system;
Figure 2 shows a schematic diagram of the hydrogen fuel system of the aircraft shown in Figure 1;
Figures 3A and 3B show schematic cross-sectional views of a valve of the hydrogen fuel system shown in Figure 2;
Figure 4 shows a schematic diagram of an example drive mechanism of the valve shown in Figures 3A and 3B;
Figure 5 shows a further schematic diagram of the drive mechanism shown in Figure 4;
Figure 6 shows a schematic diagram of an alternative valve of the hydrogen fuel system shown in Figure 2; and
Figure 7 shows a schematic diagram of an example drive mechanism of the alternative valve shown in Figure 6.

### DETAILED DESCRIPTION

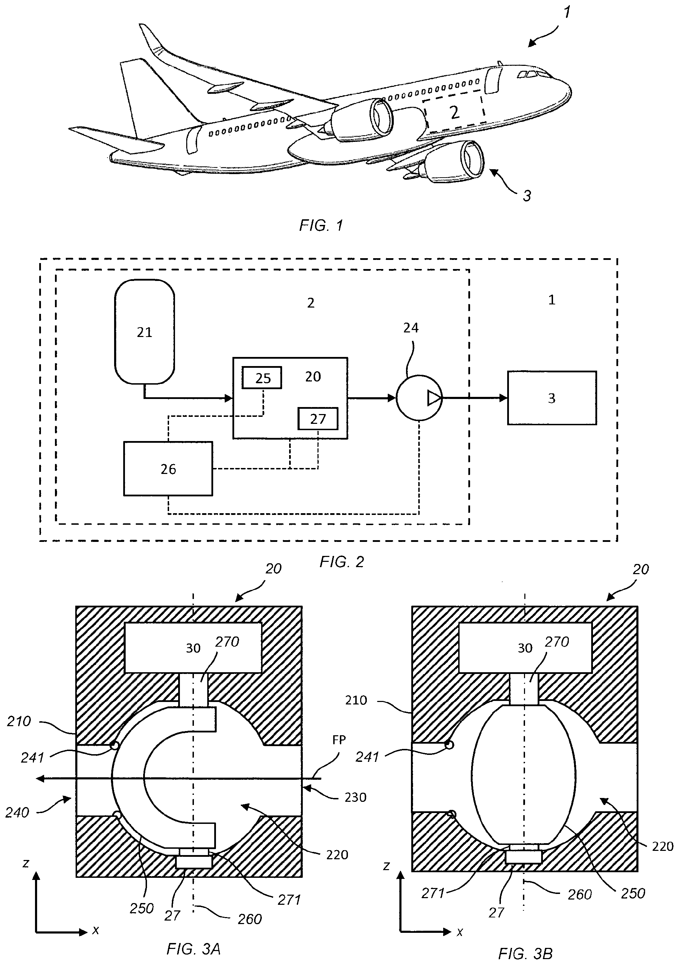

Figure 1 shows an aircraft 1 comprising an engine 3 and a hydrogen fuel system 2 for distributing hydrogen fuel to the engine 3. The engine 3 is a combustion engine configured to combust the hydrogen fuel. It will be appreciated that, in other examples, the engine 3 may comprise a hydrogen fuel cell. Such a hydrogen fuel cell may be configured to convert hydrogen and oxygen into water to generate electricity. The electricity may be used to power an electric motor to propulsively power the aircraft, or to supply electricity to other (non-propulsive) electronic components of the aircraft.

The hydrogen fuel system 2 is shown in more detail in Figure 2, and comprises a hydrogen fuel tank 21, which is a pressure vessel configured to store hydrogen fuel. The hydrogen fuel tank 21 is here located in a front portion of a fuselage of the aircraft 1, but in other examples may be located in an aft, top, or bottom portion of the fuselage, in a cargo bay, or in a wing of the aircraft 1. The hydrogen fuel system 2 also comprises a pump 24 for pumping hydrogen fuel from the fuel tank towards the engine 3, and a valve 20 configured to selectively permit or prevent a flow of hydrogen fuel from fuel tank 21 to the pump 24. The valve 20 also comprises a sensor 25 for detecting a leak of hydrogen fuel in the valve 20, and an angular position sensor 27 for detecting an angular position of the valve member 250, as will be described in more detail below. The hydrogen fuel system 2 also comprises a controller 26 communicatively connected to the pump 24, the valve 20 and the sensor 25.

Figures 3A and 3B show schematic views of the valve 20, in particular in an "x-z" plane defined by perpendicular x- and z-axes. The valve 20 comprises a valve housing 210 defining a valve chamber 220, and a valve inlet 230 and a valve outlet 240 each opening into the valve chamber 220. The valve 20 is a C-ball valve comprising a "C"-shaped valve member 250 arranged to rotate around a valve axis 260 in the valve chamber 220. The valve member 250 is shown in a closed position in Figure 3A, in which the valve member 250 interfaces with a valve seat 241 defined by the valve outlet 240 to block the valve outlet 240. In this way, the valve member 250 prevents hydrogen fuel from flowing through the valve outlet 240 (and thus through valve 20) when the valve member 250 is in the closed position. The valve member 250 is shown in an open position in Figure 3B, in which the valve member 250 is rotated 90 degrees from its closed position around the valve axis 260. In the open position, the valve member 250 defines a flow path FP through the valve chamber 220 along which the hydrogen fuel is flowable from the valve inlet 230 and the valve outlet 240. The valve member 250 comprises an input shaft 270 and a drive mechanism 30 configured to cause rotation of the input shaft 270 to selectively rotate the valve member 250 between the first and second positions. The valve 250 also comprises a mount shaft, located on an opposite side of the valve member 250 to the input shaft 270. The angular position sensor 27 is coupled to the mount shaft 271.

Providing the valve seat 241 at the valve outlet 240 ensures that cryogenic hydrogen fuel from the valve inlet is present in the valve chamber 220, even when the valve member 250 is in the closed position. The presence of cryogenic hydrogen fuel in the valve chamber 220 may reduce an amount of heating of the valve housing 210 when the valve member 250 is in the closed position. Such heating might otherwise occur if hydrogen fuel were to be prevented from entering the valve chamber 220 through the valve inlet 230 when the valve member 250 is in the closed position, such as if the valve seat 241 were to be provided at the valve inlet 230. This may, in turn, reduce heating of hydrogen fuel that later passes through the valve chamber 220 when the valve member 250 is again moved to the open position.

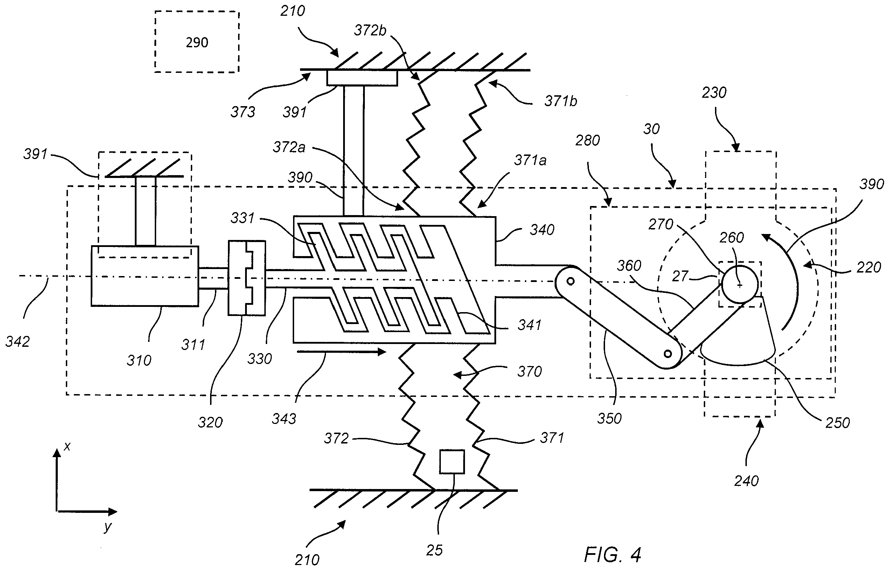

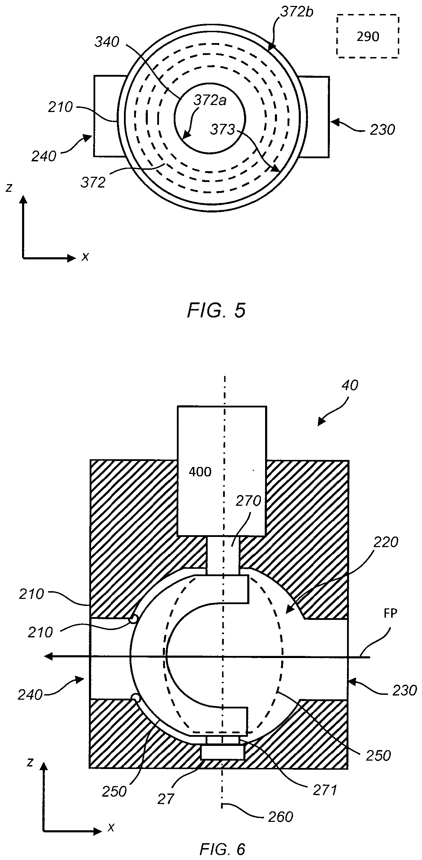

Figures 4 and 5 show schematic views of the valve 20 in an x-y plane (defined by the x-axis, and a y-axis orthogonal to the x-z plane) and the x-z plane, respectively. Details of the drive mechanism 30 can be seen in Figures 4 and 5. For ease of understanding, only parts of the valve housing 210 are shown in Figure 4, and the valve chamber 220 is shown with dashed lines.

The drive mechanism 30 comprises: a motor 310 comprising a motor shaft 311; a motor connector 320 connecting the motor shaft 311 to a threaded shaft 330; and a nut 340 engaged with the threaded shaft 330. The motor 310 is connected to a mount 391, which is fixed relative to the housing 210, to prevent relative movement of the motor 310 and the housing 210. The nut 340 is guided in a splined passage 391 of the valve housing 210 by a guide member 390, which is configured to move linearly in the splined passage 391 to permit relative linear movement of the nut 340 and the housing 210, but to prevent the nut 340 from rotating relative to the housing 210. In this way, the guide member 390 and the splined passage 391 to carry a torque from the motor 310. The splined passage 391 comprises roller bearings therein (not shown) to reduce a friction between the guide member 391 and the splined passage 391 when the guide member 391 moves linearly in the splined passage 340. It will be appreciated that, in other examples, the nut 340 may comprise the splined passage, and the guide member 390 may be rigidly connected to the housing 210.

The threaded shaft 330 comprises an outer shaft thread 331 engaged with a corresponding inner nut thread 341 of the nut 340. The drive mechanism 30 also comprises a connecting rod 350 connected to the nut 340, and a crank arm 360 connected between the connecting rod 350 and the input shaft 270 of the valve member 250. In particular, the crank arm 360 is rotatably pinned to the connecting rod 350. The valve 20 comprises the angular position sensor 27 introduced with reference to Figure 2, which is here attached to the mount shaft 271 (not visible in Figure 4) to detect an angular position of the mount shaft 271 270, and thus the valve member 250.

The valve 20 also comprises a first flexible member 371 and a second flexible member 372. The first and second flexible members 371, 372 each comprise a flexible material folded in a concertina pattern such that the folds extend around the drive axis (as shown by dashed lines in Figure 5). The first and second flexible members 371, 372 each comprise respective first and second inner ends 371a, 372a connected to the nut 340, and respective first and second outer ends 371b, 372b connected to the housing 210. The housing 210 defines an aperture wall 373 defining an aperture in which the nut 340 is located, and the first and second outer ends 371b, 372b are each connected to the aperture wall 373. The first and second members 371, 372 are connected to the nut 340 and the aperture such that there is no relative movement between the nut 340 and the respective first and second inner ends 371a, 372a, and no relative movement between the aperture wall 373 and the first and second outer ends 371b, 372b. The first and second flexible members 371, 372 are spaced apart in a direction along the drive axis 342 to define a cavity 370 therebetween. The sensor 25 is located in the cavity 370.

As best shown in Figure 5, the second flexible member 372 is annular around the nut 340 to provide a seal in the aperture. The first flexible member 371 is similarly annular around the nut 340 to provide a seal in the aperture. The first and second flexible members 371, 372 fluidically isolate the valve chamber 220 from an external atmosphere 290 external to the valve housing 210, and so prevents hydrogen fuel in the valve chamber 220 leaking to the external atmosphere 290. For instance, hydrogen fuel may pass from the valve chamber 220, through a gap between the input shaft 270 and the housing 210, and into a region 280 in the housing 210 comprising the aperture. The hydrogen fuel is prevented from passing from the region 280 through the aperture to the external atmosphere 290 by the first and second flexible members 371, 372. The cavity 370 is similarly annular around the nut 340, and is fluidically isolated from the region 280 by the first flexible member 371 and from the external atmosphere 290 by the second flexible member 290.

The valve member 250 is shown in Figure 4 in the closed position. To move the valve member 250 to the open position, the controller 26 (shown in Figure 2) causes operation of the motor 310 to cause the motor shaft 311 to rotate (specifically clockwise when viewed in the direction of the y-axis in Figure 4). This, in turn, causes a corresponding rotation of the motor connector 320 and the threaded shaft 330. Because the nut 340 is prevented from rotating relative to the housing 210, and thus relative to the motor 310, the outer shaft thread 331 of the threaded shaft 330 rotates relative to the inner nut thread 341 of the nut 340, which causes the nut 340 to move linearly relative to threaded shaft 330. This, in turn, causes the nut 340 to move linearly relative to the housing 210 along the drive axis 342 (specifically in the direction of the drive arrow 343 in Figure 4).

Such linear movement of the nut 340 provides a force to the crank arm 360 via the connecting rod 350. This force acts on the crank arm 360 at a distance from the valve axis and tangentially to the valve axis, which in turn provides a torque to the input shaft 270. This torque causes the input shaft 270, and thus the valve member 250, to rotate around the valve axis 260 to the open position (specifically anti-clockwise, in the direction of the rotation arrow 390 shown in Figure 4). The controller 26 is configured to operate the motor 310 in reverse to cause the valve member 250 to rotate around the valve axis 260 from the closed position to the open position.

The first and second flexible members 371, 372 are each able to expand and contract in (and are resilient to tensile stresses in) a direction from the respective first and second outer ends 371b, 372b to the respective first and second inner ends 371a, 372a, in particular towards the drive axis 342. This permits relative movement of the first and second inner ends 371a, 372a and the respective first and second outer ends 371b, 372b as the nut 340 moves linearly along the drive axis 342. For instance, as the nut 340 moves in the direction of the drive arrow 343 in Figure 4, the concertinaed folds of the first and second flexible members 371, 372 expand such that a distance between the first and second inner ends 371a, 372a and the respective first and second outer ends 371b, 372b increases.

It will be appreciated that the second flexible member 372 provides redundancy in the event of a leak of hydrogen fuel from the valve chamber 220 to the cavity 370 through the first flexible member 371. In particular, the second flexible member 372 prevents a further leak of the hydrogen fuel from the cavity 370 to the external atmosphere. In a similar way, the first flexible member 371 provides redundancy in the event of a leak of the external atmosphere 290 (such as air comprising oxygen) through the second flexible member 372 into the cavity 370. Providing the first and second flexible members 371, 372, as opposed to just one member, provides a reduced likelihood of hydrogen fuel mixing with the external atmosphere 290. Moreover, providing the first and second flexible members 371, 372 allows a vacuum to be provided in a space between the first and second flexible members 371, 372. This improves a thermal insulation between the valve chamber 220 and the external atmosphere 290 compared to using a single flexible member.

The sensor 25 in the cavity 370 is configured to detect the presence of hydrogen fuel in the cavity, which is an indication that fluid has leaked through the first flexible member 371. The sensor 25 sends information representative of a concentration of hydrogen fuel in the cavity to the controller 26, which in turn notifies personnel of such a leak to allow remedial action to be taken, such as maintenance or replacement of the valve 20 and/or the first flexible member 371.

The angular position sensor 27 sends position information representative of an angular position of the valve member 250 to the controller 26, which in turn determines whether the angular position of the valve member 250 is as expected, based on command signals sent to the motor 310. If there is a mis-match between an expected angular position of the valve member 250 and the position information from the angular position sensor 27, this may indicate an issue with the drive mechanism 30 and/or the valve member 250. Thus, in the event of such a mis-match, the controller 26 notifies personnel to allow remedial action to be taken, such as maintenance or replacement of the valve 20, the valve member 250, and/or components of the drive mechanism 30. Locating the angular position sensor 27 on the mount shaft 271 ensures that an issue associated with any component connected between the mount shaft 271 and the motor 310, which causes such a mis-match in angular position, is detected.

Figure 6 shows a schematic cross-sectional view, in the x-z plane, of a further valve 40 that may be provided in the hydraulic system 2 in place of the valve 20 described above. Like components of the valve 20 and the further valve 40 have been given like reference numerals, including the housing 210, the valve chamber 220, the valve member 250, the inlet 230, the outlet 240, the valve seal 210, the input shaft 270, the mount shaft 271 and the angular position sensor 27. The further valve 40 also comprises a further drive mechanism 400, different to the drive mechanism 30 of the valve 20 described above.

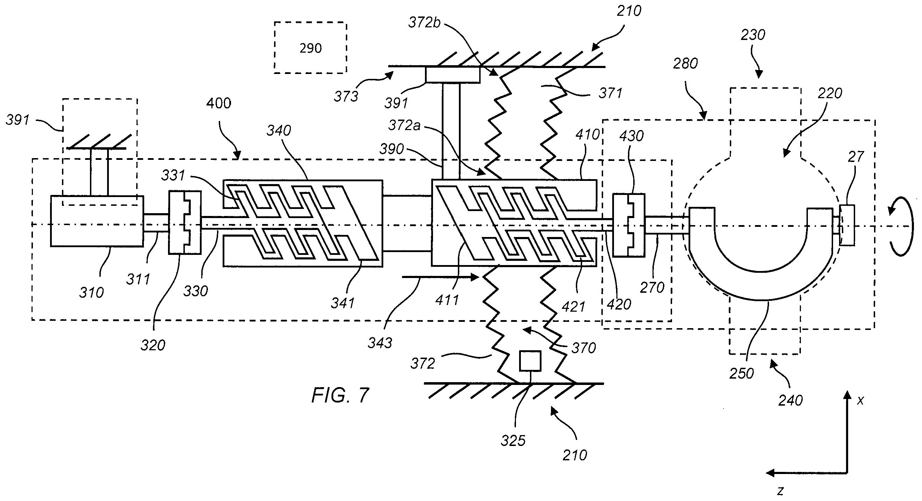

Figure 7 shows a schematic view, in the x-z plane, the further drive mechanism 400. Again, like features of the drive mechanism 30 and the further drive mechanism 400 have been given like reference numerals. In particular, the further drive mechanism 400 comprises: the motor 310, the mount 391 connected to the motor 310 and the housing 210 to prevent relative movement of the motor 310 and the housing 210; the motor shaft 311; the motor connector 320; the threaded shaft 330 and the nut 340. These components are each connected to one another in the same way as in the drive mechanism 30. The further drive mechanism 400 also comprises the first and second flexible members 371, 372 connected to the housing 210 at respective first and second outer ends 371b, 372b and located in the aperture. The first and second flexible members similarly define the cavity 370 therebetween, in which is located the sensor 25. The further valve 40 also comprises the angular position sensor 27 for detecting an angular position of the valve member 250.

The further drive mechanism 40 differs from the drive mechanism 30 in how the nut 340 is connected to the valve member 250 to translate linear motion of the nut 340 to rotational motion of the valve member 250. In particular, the nut 340 is connected to a collar 410 comprising an internal collar thread 411. The nut 340 is connected to the collar 410 so that there is no relative motion between the nut 340 and the collar 410. In some examples, the nut 340 and the collar 410 form a single part. A further threaded shaft 420 comprising a further outer shaft thread 421 is located in the collar 410 such that the further outer shaft thread 421 is engaged with the internal collar thread 411 of the collar 410. The further threaded shaft 420 is connected to the input shaft 270 of the valve member 250 via a valve connector 430.

Also differently to the drive mechanism 30, the guide member 390 in the further drive mechanism 400 is slidably connected to the collar 410 (rather than the nut 340) to permit linear movement of the collar 410 (and thus the nut 340) in the direction of a drive axis 342, but to prevent rotation of the collar 410 (and thus the nut 340) around the drive axis 342. The first and second flexible members 371, 372 of the valve 20 are also connected, at their respective first and second inner ends 371a, 372a, to the collar 410, such that there is no relative movement between the respective first and second inner ends 371a, 372a and the collar 410.

The first and second flexible members 371, 372 are otherwise configured in the same way as with the drive mechanism 30, in that they are configured to fluidically isolate the region 280 in the valve housing 210 from the external atmosphere 290 external to the valve housing 210. The first and second flexible members 371, 372 also expand and contract in a direction along the respective first and second flexible members 371, 372 from the respective first and second outer ends 371b, 372b towards the drive axis 342 as the collar 410 moves along the drive axis 342.

The valve member 250 is shown in Figure 6 in the open position. As with the drive mechanism 30, to cause the valve member 250 to rotate around the valve axis 260 to the closed position, the controller 26 is configured to operate the motor 310 to cause the motor shaft 311 to rotate. This rotation is transferred to the threaded shaft 330 via the motor connector 320, which causes the nut 340 to move linearly along the drive axis 342 as discussed above. This, in turn, causes the collar 410 to move linearly along the drive axis, which causes relative rotation of the further threaded shaft 460 in the collar 410. In a similar way to rotation of the threaded shaft 330 causing linear movement of the nut 340, the linear movement of the collar 410 causes rotation of the further threaded shaft around the drive axis 342. This rotational motion is translated to the input shaft 270, and thus the valve member 250, via the valve connector 430, to cause the valve member 250 to rotate about the valve axis. Again, the controller 26 is configured to operate the motor 310 in reverse to cause the valve member 250 to rotate around the valve axis 260 from the closed position to the open position.

It will be appreciated that any variations to the drive mechanism 30 may similarly apply to the further drive mechanism 400. Variations and modifications to systems and apparatus described herein, such as the aircraft 1, hydrogen fuel system 2, the valve 20, the drive mechanism 30 and/or the further drive mechanism 400, are also envisaged within the scope of the appended claims.

For instance, while the above description is directed to a hydrogen fuel system of an aircraft 1 comprising the valve 20, the valve 20 may be used in any other fluid system. By way of example only, the valve 20 may be employed in a ground-based hydrogen fuel system, a conventional (non-hydrogen) fuel system, a gas distribution system, or a hydraulic system for delivering pressurised hydraulic fluid to one or more components, such as hydraulic pistons, to actuate those components.

Moreover, the valve 20 described herein is a C-ball valve, but in other examples the valve 20 may be any other suitable type of valve, such as a "standard" (i.e., non-"C") ball valve, a butterfly valve, or a non-rotating valve such as a sluice valve. In the case of a valve 20 with a linearly-moving valve member 250 (e.g., a sluice valve), the first and second flexible members 371, 372 would be connected to a linearly moving drive member (such as the nut 340 or the collar 410 described above) passing through the aperture of the valve housing 210. Such linear motion would, however, instead of being converted to rotary motion, be directly translated to linear motion of the valve member 250. Such a valve 20 would still benefit from the double seal provided by the first and second flexible members.

It will also be appreciated that, while the drive mechanism 30 and the further drive mechanism 400 each comprise the threaded shaft 330 engaged with the nut 340, in some examples the locations of these components in each of the drive mechanism 30 and the further drive mechanism 400 may be reversed. For instance, the nut 340 may be coupled to the motor connector 320 to rotate with the motor shaft 311, and the threaded shaft 330 may move linearly relative to the housing 210. The locations of the collar 410 and the further threaded shaft 442 may be similarly reversed in each of the drive mechanism 30 and the further drive mechanism 400.

It will further be appreciated that the angular sensor 27 may instead be located on the input shaft 270, to detect an angular rotation of the input shaft 270. In other examples, the valve 20 may comprise a linear position sensor (not shown), configured to detect a linear position of the nut 340. Alternatively, the valve 20 may comprise a further mechanism, similar to the drive mechanism 30 and/or the drive mechanism 400, for converting a rotation of the valve member 250 to a linear movement of a sensor member. The sensor member may extend external to the valve chamber 220, and the linear position sensor may be provided external to the valve chamber 220 to detect a linear movement of the sensor member. In this way, the linear position sensor may provide the position information to the controller 26 representative of an angular position of the valve member 250. Such a further mechanism may comprise a pair of flexible members, in a similar way to the drive mechanism 30 and/or the drive mechanism 400, for fluidically isolating the valve chamber 220 from the external atmosphere 290.

It is to be noted that the term "or" as used herein is to be interpreted to mean "and/or", unless expressly stated otherwise.

## Claims

1. A valve comprising:
a valve housing defining a valve chamber;
a valve member rotatably mounted in the valve chamber;
a drive member in the valve housing, the drive member coupled to the valve member and linearly movable relative to the valve housing to cause rotation of the valve member; and
a linkage located in the housing for translating a linear motion of the drive member to a rotating motion of the valve member.

2. The valve of claim 1, comprising a flexible member comprising a first end connected to the drive member such that there is no relative movement between the first end and the drive member, and a second end connected to the valve housing such that there is no relative movement between the second end and the valve housing,
wherein the flexible member fluidically isolates the valve chamber from an external atmosphere external to the valve housing.

3. The valve of claim 1 or claim 2, comprising a further flexible member comprising a further first end connected to the drive member such that there is no relative movement between the further first end and the drive member, and a further second end connected to the valve housing such that there is no relative movement between the further second end and the valve housing.

4. The valve of claim 3, wherein the flexible member and the further flexible member are spaced apart to define a cavity between the flexible member and the further flexible member.

5. The valve of claim 4, wherein a vacuum is present in the cavity.

6. The valve of any one of claims 1 to 5, wherein the linkage comprises a crank arranged to translate the linear motion of the drive member to the rotational motion of the valve member within the valve chamber.

7. The valve of any one of claims 1 to 6, wherein the drive member comprises or is connected to a first link portion, and the linkage comprises a second link portion engaged with the first link portion,
wherein one of the first and second link portions comprises a screw thread, and the other of the first and second link portions comprises an engaging member engaged with the screw thread so that a linear motion of the first link portion relative to the second link portion causes a rotational motion of the second link portion relative to the first link portion.

8. The valve of claim 7, wherein the engaging member comprises a further screw thread.

9. The valve of any one of claims 1 to 8, comprising a linear actuator operable to cause linear motion of the drive member.

10. A fluid system comprising the valve of any one of claims 1 to 9.

11. The fluid system of claim 10, wherein the fluid system is a hydrogen fuel system.

12. The fluid system of claim 10 or claim 11, wherein the fluid system is an aircraft hydrogen fuel system.

13. An aircraft comprising the valve of any one of claims 1 to 9, or the fluid system of any one of claims 10 to 12.
